# EUROPÄISCHE PATENTSCHRIFT

(11) **EP 2 017 390 B1**
(45) Veröffentlichungstag und Bekanntmachung des Hinweises auf die Patenterteilung: **24.10.2018**
(21) Anmeldenummer: 08104207.9
(22) Anmeldetag: 02.06.2008
(51) Int. Cl.: E03B 7/07, E03C 1/10, B01D 35/143, C02F 1/28, C02F 1/42, E03C 1/02

(54) **Vorrichtung zur Wasserreinigung**
Apparatus for cleaning water
Dispositif destiné à l'assainissement de l'eau

(30) Priorität: 11.06.2007 DE 102007026849
(43) Veröffentlichungstag der Anmeldung: 21.01.2009
(73) Patentinhaber: BSH Hausgeräte GmbH, 81739 München (DE)
(72) Erfinder: Heilmaier, Marion, 83317 Teisendorf (DE); Kusstatscher, Herbert, 83371 Stein a.d. Traun (DE); Rehberg, Kay, 92224 Amberg (DE)

(56) Entgegenhaltungen:
- US-A- 5 017 286
- US-A1- 2005 236 335
- US-B1- 6 368 503

## Beschreibung

Die vorliegende Erfindung betrifft eine Vorrichtung zum verzögerungsfreien Reinigen von Wasser, gemäß dem Oberbegriff des Anspruchs 1.

Vorrichtungen zum verzögerungsfreien Reinigen von Wasser sind im Stand der Technik bekannt. So beschreibt beispielsweise die US 6 368 503 B1 ein Filtersystem, welches in einen Duschkopf eingesetzt werden kann. In diesem Zusammenhang beschreibt die US 3 741 396 eine Wasserreinigungsvorrichtung zur verzögerungsfreien Wasserreinigung, welche nach einer Wasseruhr angeschlossen werden kann. Diese Vorrichtungen weist jedoch den Nachteil auf, dass das Wasser hierbei nur von Schwebstoffen und Schmutzpartikeln gereinigt werden kann. Die Wasserhärte kann durch eine derartige Vorrichtung nicht entscheidend beeinflusst werden. Wird z.B. beim Duschen Wasser verwendet, welches durch die oben bezeichnete Vorrichtung gereinigt wurde, so hinterlässt das Wasser, in Abhängigkeit von dem regional zur Verfügung stehenden Wasser, auf Armaturen und Wandfliesen Kalkflecken.

Dokument US6368503 offenbart ein Wasserfiltersystem, das an dem Auslass eines Wasserhahns eingesetzt werden kann.

Dokument US6368503 wird als nächstliegender Stand der Technik angesehen. Dieses Dokument entspricht dem Oberbegriff des Anspruchs 1.

Somit ist es Aufgabe der vorliegenden Erfindung, eine Vorrichtung zum verzögerungsfreien Reinigen von Wasser zur Verfügung zu stellen, welche das Wasser verzögerungsfrei und zuverlässig reinigt und zugleich enthärtet, wobei unnötige Belastungen des Mittels zur Reinigung vermieden werden können.

Gelöst wird diese Aufgabe mit den Merkmalen des Patentanspruchs 1, wobei es sich besonderes vorteilhaft erwiesen hat, wenn das Mittel zum Schalten dann, wenn es in der Weise eingestellt ist, dass das Wasser durch das Mittel zum Reinigen hindurch leitbar ist, nach einem definierten Zeitraum selbsttätig die Einstellung herbeiführt, bei der das Wasser an dem Mittel zum Reinigen vorbei leitbar ist. Wird z.B. versehentlich eine Einstellung vorgenommen, bei der das Wasser durch das Mittel zum Reinigen hindurch leitbar ist, so wird nach einem definierten Zeitraum eine unnötige Belastung des Mittels zur Reinigung vermieden.Andere vorteilhafte Aus- und Weiterbildungen der Erfindung, welche einzeln oder in Kombination miteinander eingesetzt werden können, sind Gegenstand der Unteransprüche.

Die erfindungsgemäße Vorrichtung baut auf gattungsgemäßen Vorrichtungen dadurch auf, dass das Mittel zum Reinigen des Wassers zumindest einen Kationenaustauscher umfasst.

Dadurch wird gegenüber dem Stand der Technik eine erhebliche Verbesserung der Wasserreinigung erzielt. Indem die Vorrichtung zur Wasserreinigung einen Kationenaustauscher umfasst, wird eine verzögerungsfreie, effektive und kostengünstige Reinigung des Wassers, und darüber hinaus eine zuverlässige Entfernung der Wasserhärte erzielt. Das Mittel zur Wasserreinigung, welches einen Kationenaustauscher umfasst, kann schnell und kostengünstig ausgetauscht werden.

Dadurch, dass die Vorrichtung zumindest zwei die Wassereintrittsöffnung und die Wasseraustrittsöffnung verbindende Wasserläufe aufweist, wobei über einen ersten Wasserlauf das Wasser durch das Mittel zum Reinigen hindurch leitbar ist und über einen zweiten Wasserlauf das Wasser an dem Mittel zum Reinigen vorbei leitbar ist, wird sichergestellt, dass die Vorrichtung mit und ohne Betrieb des Mittels zur Reinigung des Wassers betrieben werden kann. Unnötige Betriebszeiten der Vorrichtung zum Reinigen des Wassers werden so vermieden. Mit Hilfe des Mittels zum Schalten, mit Hilfe dessen der Verlauf des Wassers innerhalb des Gehäuses zwischen den verschiedenen Wasserläufen verteilbar ist, kann der Anwender hierbei schnell von Filterbetrieb auf Nicht-Filterbetrieb und umgekehrt umschalten. Dieses hat den großen Vorteil, dass der Anwender während des Duschens zwischen verschiedenen Funktionen wählen kann. Somit kann der Anwender die Qualität des Wassers nach seinen Wünschen mit einem einfachen Handgriff einstellen. Es hat sich nämlich gezeigt, dass die Entfernung der Härte des Wassers, chemisch wie mechanisch, dazu führt, dass das Wasser für den Verbraucher subjektiv gesehen an Reinigungsqualität verliert: Mit abnehmender Wasserhärte nimmt die vom Verbraucher subjektiv empfundene Reinigungsqualität des Wassers ab - es wird weich. Verbraucher von sehr weichem Wasser beschreiben das Wasser in der Regel als seifig; diese Personen haben häufig das Gefühl, sie könnten Seifenreste durch das Wasser nicht vollständig abwaschen. Somit besteht im Stand der Technik ein technisches Dilemma: wird die temporäre Härte umfassend entfernt, so werden zwar Kalkflecken auf Armaturen oder anderen Oberflächen vermieden, zugleich aber führt dies zu einer Verschlechterung der Reinigungsqualität des Wassers. Dieses technische Dilemma löst die vorliegende Erfindung in einer technisch überzeugenden Weise. Möchte sich der Anwender reinigen, so wird er eine Einstellung wählen, bei der das Wasser an dem Mittel zum Reinigen vorbei leitbar ist, um zu vermeiden, dass das Wasser zu weich und damit für ihn zu seifig wird. Ist die Körper-Reinigung abgeschlossen und möchte er z.B. die Armaturen oder die Fliesen abspülen, so kann der Anwender eine Einstellung wählen, bei der das Wasser durch das Mittel zum Reinigen hindurch leitbar ist. Dadurch wird verhindert, dass sich Kalkpartikel an Oberflächen wie z.B. der Duschwand, den Fliesen, den Armaturen oder am Duschkopf niederschlagen. Dadurch wird ein nahezu kalkfreies, hochreines, sehr sauberes Wasser hervorgebracht, mittels dessen er Oberflächen wie Fliesen und Armaturen reinigen kann, ohne dass Kalkflecken und sonstige Verschmutzungen zurückbleiben. Gleichzeitig aber bleiben die Vorzüge des kalkhaltigen Wassers bei der Reinigung erhalten und der Anwender kann die subjektiv wahrnehmbaren Eigenschaften des Wassers nach seinen Wünschen mit einer einfachen Schaltbewegung verändern.

Von besonderem Vorteil ist es dabei, wenn das Mittel zum Schalten dann, wenn kein Wasser durch die Vorrichtung strömt, selbsttätig eine Einstellung herbeiführt, in der das Wasser an dem Mittel zum Reinigen vorbei leitbar ist. Dies hat den Vorteil dass dann, wenn die Wasserarmatur wieder betätigt wird, und Wasser durch die Vorrichtung fließt, dieses zunächst nicht gereinigt bzw. enthärtet wird. Dadurch wird ein unnötiger Filterbetrieb vermieden und die Laufzeit des Mittels zur Reinigung verlängert. Bei Bedarf kann durch einen einfachen Schaltvorgang wieder eine Aktivierung des Mittels zur Reinigung des Wassers bewirkt werden.

In einer bevorzugten Ausführungsform ist ein Mittel vorgesehen, welches anzeigt, wenn das Mittel zum Reinigen des Wassers ausgewechselt werden soll. Diese Anzeige kann über eine Zeitschaltuhr oder über ein Leuchtfeld, welches z.B. von Leuchtdioden ausgeleuchtet wird, erfolgen. Es kann aber auch über eine manuelle Anzeige, die von dem Anwender zu betätigen, erfolgen. So kann er z.B. für jeden verstrichenen Tag, jede verstrichene Woche oder jeden verstrichenen Monat eine drehbare Anzeige um ein Segment weiter drehen, so dass er daran erinnert wird, wie viel Zeit seit der Inbetriebnahme des Mittels zur Reinigung verstrichen ist. Durch eine kurze Augenscheinnahme kann er sich jederzeit darüber informieren, wann wieder ein Filtertausch erforderlich ist.

Von besonderem Vorteil ist es dabei, wenn das Mittel, welches die Erforderlichkeit eines Filterwechsels anzeigt, nach einem definierten Zeitraum und/oder einer definierten Nutzungszeit und/oder nach dem Erreichen eines definierten Verbrauchszustandes einen Wechsel anzeigt. Der definierte Zeitraum bzw. die definierte Nutzungszeit kann dabei über eine Uhr bzw. Zeitschaltuhr ermittelt werden. Die definierte Nutzungszeit, nach der ein Filterwechsel erforderlich erscheint, kann ab Werk schon einprogrammiert werden, es ist aber auch ein Speicherprogramm mit einem Display möglich, über das der Verbraucher selber eine Zeit definieren kann, nach der er einen Austausch für erforderlich hält. Der Verbrauchszustand der Mittels zum Reinigen lässt sich z.B. dadurch bestimmen, dass die Leitfähigkeit des Wassers vor und nach der Reinigung durch das Mittel bestimmt wird, und über die Differenz der Werte eine Aussage darüber getroffen werden kann, ob das Mittel zum Reinigen des Wassers noch funktionsfähig ist oder ausgewechselt werden muss.

Es hat sich als besonders vorteilhaft erwiesen, wenn das Mittel zum Reinigen des Wassers einen Filter auf Basis von Zeolithe und/oder Kunstharz umfasst.

In einer bevorzugten Ausführungsform ist die Vorrichtung zum Reinigen von Wasser zwischen Duschschlauch und Warmwasser-Armatur installierbar. Hierfür weist die Vorrichtung Anschlüsse auf, die diese Installation ermöglichen. Zugleich weist die Vorrichtung hierzu Größendimensionen auf, die diesen Anschluss ermöglichen. Dies hat den Vorteil, dass der Anwender z.B. während des Duschbades die Qualität des genutzten Wassers verändern kann, ohne sein Duschbad unterbrechen zu müssen.

Die erfindungsgemäße Vorrichtung zum verzögerungsfreien Reinigen von Wasser bietet eine zuverlässige, kostengünstige und effektive Möglichkeit der Wasserenthärtung bei gleichzeitig sehr gutem Bedienkomfort und verlängerter Gerätelebensdauer.

Weitere Vorteile der Ausgestaltungen der Erfindung werden im Folgenden anhand eines Ausführungsbeispiels, auf welches die vorliegende Erfindung jedoch nicht beschränkt ist, sowie unter Bezugnahme auf die beiliegende Zeichnung erläutert.

Darin zeigt schematisch:

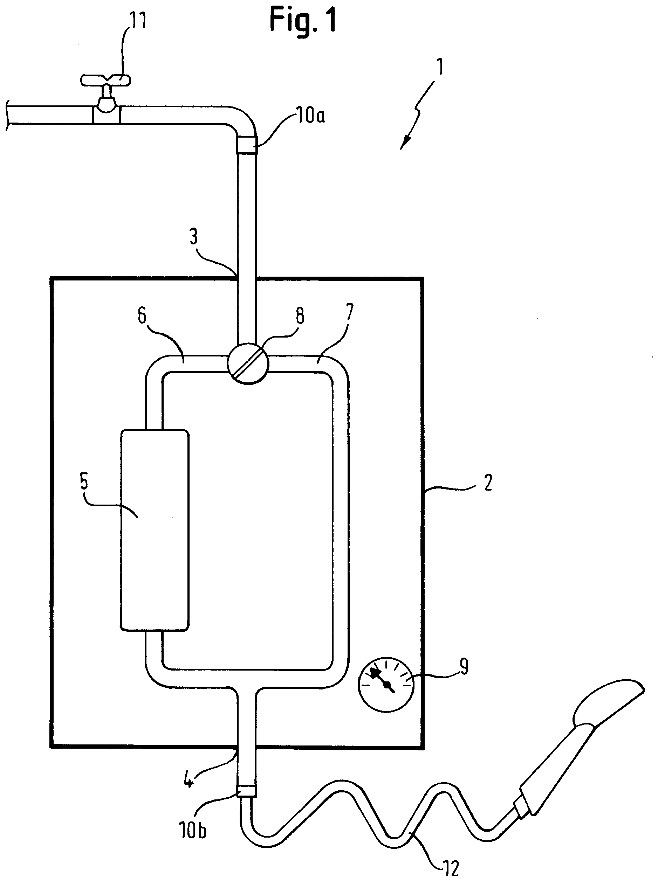

Fig. 1 eine Vorrichtung zur Wasserreinigung von vorne.

Bei der nachfolgenden Beschreibung der bevorzugten Ausführungsform bezeichnen gleiche Bezugszeichen gleiche oder vergleichbare Komponenten.

Fig. 1 zeigt in einer schematischen Vorderansicht eine Vorrichtung 1 zur verzögerungsfreien Wasserreinigung. Diese umfasst ein Gehäuse 2, welches wenigstens eine Wassereintrittsöffnung 3 sowie wenigstens eine Wasseraustrittsöffnung 4 aufweist. Weiterhin umfasst die Vorrichtung 1 wenigstens ein Mittel 5 zum Reinigen des Wassers, sowie zumindest zwei die Wassereintrittsöffnung 3 und die Wasseraustrittsöffnung 4 verbindende Wasserläufe 6 bzw. 7, wobei über einen ersten Wasserlauf 6 das Wasser durch das Mittel 5 zum Reinigen hindurch leitbar ist und über einen zweiten Wasserlauf 7 das Wasser an dem Mittel 5 zum Reinigen vorbei leitbar ist. Weiterhin weist die Vorrichtung 1 ein Mittel 8 zum Schalten auf, mit Hilfe dessen der Verlauf des Wassers innerhalb des Gehäuses 2 zwischen den verschiedenen Wasserläufen 6 und 7 verteilbar ist. Erfindungsgemäß umfasst das Mittel 5 zum Reinigen des Wassers zumindest einen Kationenaustauscher. Weiterhin weist die Vorrichtung 1 ein Mittel 9 auf, welches anzeigt, wenn ein Austausch des Mittels 5 zum Reinigen des Wassers erforderlich ist. Diese Anzeige kann nach einem definierten Zeitraum und/oder einer definierten Nutzungszeit und/oder nach dem Erreichen eines definierten Verbrauchszustandes erfolgen. Die Vorrichtung 1 weist Anschlüsse 10 a und 10 b auf, die eine Installation des Geräts zwischen Wasserarmatur 11 und Wasserschlauch 12 ermöglichen.

Die erfindungsgemäße Vorrichtung zum verzögerungsfreien Reinigen von Wasser bietet eine zuverlässige, kostengünstige und effektive Möglichkeit der Wasserenthärtung bei gleichzeitig sehr gutem Bedienkomfort und verlängerter Gerätelebensdauer.

### Bezugszeichenliste

- 1: Vorrichtung zum verzögerungsfreien Reinigen von Wasser
- 2: Gehäuse
- 3: Wassereintrittsöffnung
- 4: Wasseraustrittsöffnung
- 5: Mittel zum Reinigen des Wassers
- 6: Erster Wasserlauf
- 7: Zweiter Wasserlauf
- 8: Mittel zum Schalten des Wasserlaufs
- 9: Mittel zur Anzeige eines Wechsels
- 10 a, 10 b: Anschluss
- 11: Wasserarmatur
- 12: Wasserschlauch

## Patentansprüche

1. Vorrichtung (1) zum verzögerungsfreien Reinigen von Wasser, umfassend ein Gehäuse (2), welches wenigstens eine Wassereintrittsöffnung (3) sowie wenigstens eine Wasseraustrittsöffnung (4) aufweist, wenigstens ein Mittel (5) zum Reinigen des Wassers, sowie zumindest zwei die Wassereintrittsöffnung (3) und die Wasseraustrittsöffnung (4) verbindende Wasserläufe (6,7), wobei über einen ersten Wasserlauf (6) das Wasser durch das Mittel (5) zum Reinigen hindurch leitbar ist und über einen zweiten Wasserlauf (7) das Wasser an dem Mittel (5) zum Reinigen vorbei leitbar ist, sowie wenigstens ein Mittel (8) zum Schalten, mit Hilfe dessen der Verlauf des Wassers innerhalb des Gehäuses (2) zwischen den verschiedenen Wasserläufen (6,7) verteilbar ist, wobei das Mittel (5) zum Reinigen des Wassers zumindest einen Kationenaustauscher umfasst, **dadurch gekennzeichnet, dass** das Mittel (8) zum Schalten, wenn es in der Weise eingestellt ist, dass das Wasser durch das Mittel (5) zum Reinigen hindurch leitbar ist, nach einem definierten Zeitraum selbsttätig die Einstellung herbeiführt, bei der das Wasser an dem Mittel (5) zum Reinigen vorbei leitbar ist.

2. Vorrichtung (1) zum Reinigen von Wasser nach Anspruch 1, **dadurch gekennzeichnet, dass** das Mittel (8) zum Schalten dann, wenn kein Wasser durch die Vorrichtung (1) strömt, nach einem definierten Zeitraum selbsttätig eine Einstellung herbeiführt, in der das Wasser an dem Mittel (5) zum Reinigen vorbei leitbar ist.

3. Vorrichtung (1) zum Reinigen von Wasser nach einem der vorhergehenden Ansprüche, **dadurch gekennzeichnet, dass** ein Mittel (9) vorgesehen ist, welches anzeigt, wenn ein Austausch des Mittels (5) zum Reinigen des Wassers erforderlich ist.

4. Vorrichtung (1) zum Reinigen von Wasser nach Anspruch 3, **dadurch gekennzeichnet, dass** das Mittel (9), welches anzeigt, wenn ein Austausch des Mittels (5) zum Reinigen des Wassers erforderlich ist, nach einem definierten Zeitraum und/oder einer definierten Nutzungszeit und/oder nach dem Erreichen eines definierten Verbrauchszustandes einen Wechsel anzeigt.

5. Vorrichtung (1) zum Reinigen von Wasser nach einem der vorhergehenden Ansprüche, **dadurch gekennzeichnet, dass** das Mittel (5) zum Reinigen des Wassers Zeolithe und/oder Kunstharz umfasst.

6. Vorrichtung (1) zum Reinigen von Wasser nach einem der vorhergehenden Ansprüche, **dadurch gekennzeichnet, dass** die Vorrichtung (1) zwischen Wasserarmatur (11) und Wasserschlauch (12) installierbar ist.

## Claims

1. Device (1) for instantly purifying water, including a housing (2) which has at least one water inlet opening (3) as well as at least one water outlet opening (4), at least a means (5) for purifying the water, as well as at least two water conduits (6, 7) connecting the water inlet opening (3) and the water outlet opening (4), with it being possible for the water to pass through the purification means (5) by way of a first water conduit (6) and for the water to bypass the purification means (5) by way of a second water conduit (7), as well as at least one means (8) for switching, with the aid of which the course of the water within the housing (2) can be distributed between the different water conduits (6, 7), wherein the means (5) for purifying the water includes at least one cation exchanger, **characterised in that** the means (8) for switching, when it is set such that the water can pass through the purification means (5), automatically executes the setting following a defined period of time, with which setting the water can bypass the purification means (5).

2. Device (1) for purifying water according to claim 1, **characterised in that** when no water flows through the device (1), the means (8) for switching automatically executes a setting following a defined period, with which setting the water can bypass the purification means (5).

3. Device (1) for purifying water according to one of the preceding claims, **characterised in that** a means (9) is provided, which indicates when the means (5) for purifying water needs to be replaced.

4. Device (1) for purifying water according to claim 3, **characterised in that** the means (9), which indicate when the means (5) for purifying water needs to be replaced, indicates a change after a defined period and/or after a defined period of use and/or after a defined used state has been achieved.

5. Device (1) for purifying water according to one of the preceding claims, **characterised in that** the means (5) for purifying water includes zeolite and/or resin.

6. Device (1) for purifying water according to one of the preceding claims, **characterised in that** the device (1) can be installed between the water fitting (11) and water hose (12).

## Revendications

1. Dispositif (1) destiné à l'assainissement instantané de l'eau, comportant un boîtier (2), lequel comprend au moins une ouverture d'entrée d'eau (3) ainsi qu'au moins une ouverture de sortie d'eau (4), au moins un moyen (5) destiné à l'assainissement de l'eau, ainsi qu'au moins deux courants d'eau (6, 7) reliant l'ouverture d'entrée d'eau (3) et l'ouverture de sortie d'eau (4), dans lequel l'eau peut être amenée à passer à travers le moyen (5) destiné à l'assainissement par l'intermédiaire d'un premier courant d'eau (6) et l'eau peut être amenée à passer devant le moyen (5) destiné à l'assainissement par l'intermédiaire d'un deuxième courant d'eau (7), ainsi qu'au moins un moyen (8) destiné au raccordement, à l'aide duquel le cours de l'eau à l'intérieur du boîtier (2) peut être distribué entre les différents courants d'eau (6, 7), dans lequel le moyen (5) destiné à l'assainissement de l'eau comporte au moins un échangeur de cations, **caractérisé en ce que** le moyen (8) destiné au raccordement, lorsqu'il est réglé de manière à ce que l'eau puisse être amenée à passer à travers le moyen (5) destiné à l'assainissement, après une période de temps définie, provoque automatiquement le réglage selon lequel l'eau peut être amenée à passer devant le moyen (5) destiné à l'assainissement.

2. Dispositif (1) destiné à l'assainissement de l'eau selon la revendication 1, **caractérisé en ce que** le moyen (8) destiné au raccordement, lorsqu'il n'y a pas d'eau qui s'écoule à travers le dispositif (1), après une période de temps définie, provoque alors automatiquement un réglage dans lequel l'eau peut être amenée à passer devant le moyen (5) destiné à l'assainissement.

3. Dispositif (1) destiné à l'assainissement de l'eau selon l'une des revendications précédentes, **caractérisé en ce qu'**il est prévu un moyen (9) qui indique quand un remplacement du moyen (5) destiné à l'assainissement de l'eau est nécessaire.

4. Dispositif (1) destiné à l'assainissement de l'eau selon la revendication 3, **caractérisé en ce que** le moyen (9) qui indique quand un remplacement du moyen (5) destiné à l'assainissement de l'eau est nécessaire, après une période de temps définie et/ou une durée d'utilisation définie et/ou après qu'un état de fonctionnement défini a été atteint, indique un changement.

5. Dispositif (1) destiné à l'assainissement de l'eau selon l'une des revendications précédentes, **caractérisé en ce que** le moyen (5) destiné à l'assainissement de l'eau comporte des zéolithes et/ou une résine synthétique.

6. Dispositif (1) destiné à l'assainissement de l'eau selon l'une des revendications précédentes, **caractérisé en ce que** le dispositif (1) peut être installé entre un robinet à eau (11) et un tuyau d'eau (12).
